(19) **Europäisches Patentamt / European Patent Office / Office européen des brevets**

(11) **EP 2 681 889 B1**

(12) **FASCICULE DE BREVET EUROPEEN**

(45) Date de publication et mention de la délivrance du brevet:
**06.01.2016 Bulletin 2016/01**

(21) Numéro de dépôt: **12711943.6**

(22) Date de dépôt: **27.02.2012**

(51) Int Cl.:
***H04L 27/26*** $^{(2006.01)}$

(86) Numéro de dépôt international:
**PCT/FR2012/050401**

(87) Numéro de publication internationale:
**WO 2012/117191 (07.09.2012 Gazette 2012/36)**

(54) **PROCEDE DE MODULATION D'UN SIGNAL MULTIPORTEUSE DE TYPE OQAM, PROGRAMME D'ORDINATEUR ET MODULATEUR CORRESPONDANTS**

VERFAHREN ZUR MODULATION EINES OQAM-MEHRTRÄGERSIGNALS SOWIE ENTSPRECHENDES COMPUTERPROGRAMM UND MODULATOR DAFÜR

METHOD FOR MODULATING AN OQAM MULTI-CARRIER SIGNAL, AND CORRESPONDING COMPUTER PROGRAM AND MODULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2011 FR 1151590**

(43) Date de publication de la demande:
**08.01.2014 Bulletin 2014/02**

(73) Titulaire: **Orange**
**75015 Paris (FR)**

(72) Inventeurs:
• **DANDACH, Youssef**
**F-35700 Rennes (FR)**
• **SIOHAN, Pierre**
**F-35200 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
• **SAHNINE C ET AL: "Efficient design approach and advanced architectures for universal OFDM systems", MICROELECTRONICS AND ELECTRONICS CONFERENCE, 2007. RME. PH.D. RESEARCH IN, IEEE, PI, 1 juillet 2007 (2007-07-01), pages 33-36, XP031189856, DOI: 10.1109/RME.2007.4401804 ISBN: 978-1-4244-1000-2**
• **Jones D L: "Decimation-in-time (DIT) Radix-2 FFT", , 15 septembre 2006 (2006-09-15), XP002661750, Extrait de l'Internet: URL:cnx.org/content/m12016/latest/ [extrait le 2011-10-20]**
• **HAO LIN ET AL: "OFDM/OQAM with Hermitian Symmetry: Design and Performance for Baseband Communication", IEEE INTERNATIONAL CONFERENCE ON COMMUNICATIONS, 2008 : ICC '08 ; 19 - 23 MAY 2008, BEIJING, CHINA, IEEE, PISCATAWAY, NJ, USA, 19 mai 2008 (2008-05-19), pages 652-656, XP031265449, ISBN: 978-1-4244-2075-9**
• **YOUSSEF DANDACH ET AL: "FBMC/OQAM Modulators with Half Complexity", GLOBAL TELECOMMUNICATIONS CONFERENCE (GLOBECOM 2011), 2011 IEEE, IEEE, 5 décembre 2011 (2011-12-05), pages 1-5, XP032097625, DOI: 10.1109/GLOCOM.2011.6133591 ISBN: 978-1-4244-9266-4**

**EP 2 681 889 B1**

**Description**

**1. Domaine de l'invention**

Le domaine de l'invention est celui des communications numériques.

Plus précisément, l'invention concerne la phase de modulation de signaux multiporteuses de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquels les porteuses sont mises en forme par un filtre prototype.

L'invention trouve notamment des applications dans le domaine des communications sans fil (DAB, DVB-T, WLAN, optique non guidée, etc) ou filaires (xDSL, PLC, optique, etc).

**2. Art antérieur**

Les techniques de transmission à porteuses multiples présentent de nombreux avantages, notamment dans le contexte de canaux multi-trajets. Ainsi, les modulations de type OFDM sont particulièrement bien adaptées pour contrer les effets des évanouissements dans les canaux sélectifs en fréquence.

Toutefois, ces modulations OFDM présentent l'inconvénient de générer un signal multiporteuse présentant une mauvaise localisation fréquentielle, et nécessitent donc l'introduction d'un intervalle de garde dans le domaine temporel pour limiter les interférences. Or l'insertion d'un tel intervalle de garde engendre une diminution de l'efficacité spectrale du signal multiporteuse.

Des solutions alternatives ont alors été proposées pour limiter les interférences tout en s'affranchissant de l'insertion d'un intervalle de garde. Ces techniques reposent sur la mise en forme du signal par des filtres (pour un signal discrétisé) ou des fonctions (pour un signal continu), dits prototypes, permettant une meilleure localisation fréquentielle grâce à des propriétés d'orthogonalité restreintes au corps des réels. Il s'agit par exemple des modulations de type OFDM/OQAM ou BFDM/OQAM, classiquement utilisées pour les communications radiofréquences, telles que décrites notamment dans les documents *"Analysis of OFDM/OQAM systems based on the filterbank theory"*, P. Siohan et N. Lacaille, Proc. GLOBECOM'99, Rio de Janeiro, Brazil, Dec. 1999, pp. 2279-2284, et *"Design of BFDM/OQAM systems based on biorthogonal modulated filter banks"*, C. Siclet et P. Siohan, Proc. GLOBECOM'00, San Francisco, USA, Nov. 2000, pp. 701-705.

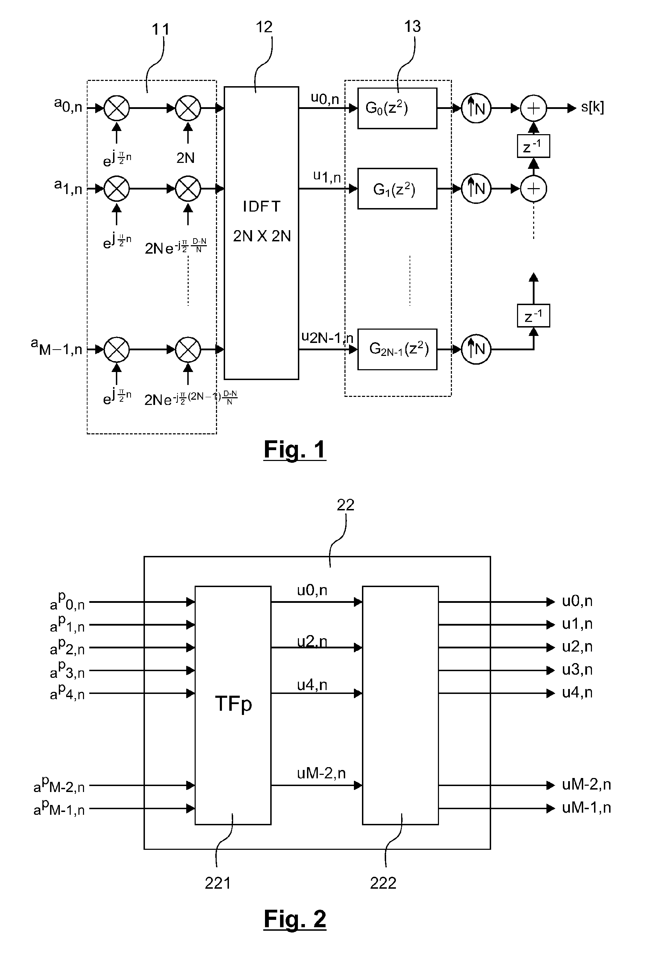

La figure 1 illustre plus précisément le schéma d'un modulateur OFDM/OQAM classique délivrant un signal multiporteuse de type OFDM/OQAM. Un tel signal peut être représenté, en bande de base et en temps discret, sous la forme suivante :

$$s[k] = \sum_{m=0}^{M-1} \sum_{n=-\infty}^{n=+\infty} a_{m,n} h[k-nN] e^{j\frac{2\pi}{M}m(k-D/2)} e^{j\phi_{m,n}}$$

avec :

- $a_{m,n}$ un symbole de données à valeur réelle à transmettre sur une porteuse $m$ à l'instant $n$ ;
- $M$ le nombre de fréquences porteuses ;
- $N = M / 2$ un décalage temporel discret ;
- $h[n]$ le filtre prototype utilisé par le modulateur, de longueur L ;
- D le délai introduit par le filtre prototype, tel que D = L - 1 ;
- $\phi_{m,n}$ un terme de phase choisi de manière à réaliser une alternance partie réelle-partie imaginaire permettant l'orthogonalité, par exemple égal à $\frac{\pi}{2}(n+m)$.

Comme illustré sur la figure 1, les symboles de données $a_{m,n}$, qui portent une valeur réelle, subissent un pré-traitement ou une pré-modulation 11, permettant notamment d'assurer une quadrature en temps et en fréquence des porteuses du signal multiporteuse.

Plus précisément, au cours de ce pré-traitement, les symboles de données réels $a_{m,n}$ sont multipliés par un premier terme de phase en $\pi/2$, permettant d'assurer un déphasage en temps et en fréquence des porteuses du signal multiporteuse, et par un deuxième terme permettant de tenir compte de la longueur du filtre prototype. Les symboles de données obtenus en sortie de ce module de pré-traitement, notés $a_{m,n}^p$, peuvent s'exprimer sous la forme suivante :

$$a_{m,n}^p = a_{m,n} e^{j\frac{\pi}{2}n} 2Ne^{-j\frac{\pi}{2}m\frac{D-N}{N}} .$$

Ces symboles de données sont ensuite convertis du domaine fréquentiel vers le domaine temporel, en utilisant classiquement une transformée de Fourier inverse discrète (en anglais IDFT pour « Inverse Discrete Fourier Transform ») de taille M, dans un module IDFT 12. Les symboles transformés obtenus en sortie du module IDFT 12, notés $u_{0,n}$ à $u_{2N-1,n}$ sont alors filtrés par le filtre prototype $h[n]$ 13, puis sur-échantillonnés et décalés pour obtenir le signal multiporteuse OFDM/OQAM $s[k]$. Plus précisément, le filtre prototype $h[n]$ peut s'exprimer sous sa forme polyphase, comprenant M composantes polyphases $G_l(z)$, définies par : $G_l(z) = \sum_n h[l + nM]z^{-n} .$

De plus, pour une modulation de type OFDM/OQAM, les symboles de données $a_{m,n}$ sont, à l'instant symbole $n$ et pour la porteuse $m$, issus d'opérations préliminaires usuelles non représentées, comprenant la transformation de données initiales sous forme d'un train binaire en symboles q-aire. Dans le cas d'une modulation d'amplitude en quadrature QAM à constellation carrée à $2^{2K}$ états, où chaque état correspond à un complexe, cette transformation est de type binaire à $2K$ aire. Par exemple, pour une 4-QAM, les quatre états sont (1+i), (1-i), (-1+i), (-1-i). Ensuite, comme dans le cadre d'une transmission en OFDM/OQAM, les parties réelle et imaginaire sont traitées séparément, cela revient à avoir une constellation unidimensionnelle à $K$ états, où chaque état possible correspond à une valeur réelle (1 ou -1 pour une 4-QAM par exemple). Autrement dit, les symboles de données $a_{m,n}$ sont le résultat d'une transformation binaire à $K$-aire de type PAM (en anglais « Pulse Amplitude Modulation »).

Le document SAHNINE C ET AL: "Efficient design approach and advanced architectures for universal OFDM systems", Proceedings of the 2007 Ph.D Research in Microelectronics and Electronics Conférence, Piscataway US, ISBN: 978-1-4244-1000-2, 01-07-2007, pages 33 - 36 divulgue une modulation OQAM utilisant une iFFT du type RADIX-2, dont il est connu qu'elle consiste de deux transformations Fourier partielles délivrant deux sous-ensembles complémentaires.

Cependant, malgré le gain qu'offrent les modulations de type OFDM/OQAM par rapport aux modulations de type OFDM au niveau de l'efficacité spectrale, du fait qu'elles permettent de s'affranchir de l'insertion d'un intervalle de garde, les modulations OFDM sont souvent préférées car leur mise en oeuvre est plus simple.

En particulier, la modulation OFDM/OQAM est plus complexe que la modulation OFDM en termes de complexité opératoire (c'est-à-dire en nombre de multiplications et additions).

En effet, pour un nombre de sous-porteuses donné et un débit fixé identique pour les symboles de données des deux systèmes de modulation, la modulation OFDM/OQAM nécessite une transformation de Fourier discrète inverse (IDFT) à la cadence des symboles de données réels, c'est-à-dire à une cadence double de celle de la modulation OFDM. Le nombre d'opérations lors de l'IDFT réalisées par le modulateur OFDM/OQAM est donc double de celui réalisé par le modulateur OFDM pour produire un même nombre de symboles multiporteuses en sortie du modulateur.

De plus, la modulation OFDM/OQAM nécessite une mise en forme par un filtre prototype, qui engendre des opérations spécifiques. Le modulateur OFDM utilise quant à lui un filtre rectangulaire, qui ne nécessite pas d'opérations particulières. On peut toutefois noter que ce coût de complexité reste relativement faible pour des filtres prototypes de courte longueur L (égale à quelques fois le nombre de porteuses M).

Il existe donc un besoin pour une nouvelle technique de modulation permettant de générer un signal multiporteuse de type OFDM/OQAM ou BFDM/OQAM, présentant une complexité réduite par rapport aux techniques de l'art antérieur.

### 3. Exposé de l'invention

L'invention propose une solution nouvelle qui ne présente pas l'ensemble de ces inconvénients de l'art antérieur, sous la forme d'un procédé de modulation délivrant un signal multiporteuse de type OQAM.

Selon l'invention, un tel procédé met en oeuvre une étape de transformation, du domaine fréquentiel vers le domaine temporel, d'un ensemble de M symboles de données réels délivrant M symboles transformés, dite transformation complète, comprenant les sous-étapes suivantes :

- application d'une transformée de Fourier partielle à l'ensemble de M symboles de données réels, délivrant un premier sous-ensemble de C symboles transformés, avec C strictement inférieur à M ;
- obtention, à partir du premier sous-ensemble, d'un deuxième sous-ensemble de (M-C) symboles transformés, complémentaire dudit premier sous-ensemble.

L'invention propose ainsi une nouvelle technique de modulation OFDM/OQAM ou BFDM/OQAM, appelée plus généralement OQAM, présentant une complexité réduite par rapport aux techniques de l'art antérieur.

Plus précisément, l'invention propose de calculer uniquement une partie des sorties d'un module de transformation fréquence/temps, en utilisant un algorithme de type transformée de Fourier partielle, et de déduire le reste des sorties du module de transformation fréquence/temps à partir des premières sorties calculées.

De cette façon, on diminue considérablement le nombre d'opérations (multiplications, additions) classiquement effectuées.

Selon un aspect particulier de l'invention, les premier et deuxième sous-ensembles présentent une taille identique. En d'autres termes, C = M/2.

Ainsi, on calcule au cours de la première sous-étape la moitié des sorties du module de transformation fréquence/temps, correspondant par exemple à la moitié supérieure des sorties de ce module, et on obtient au cours de la deuxième sous-étape l'autre moitié des sorties du module de transformation fréquence/temps, correspondant selon cet exemple à la moitié inférieure des sorties de ce module.

Par exemple, le premier sous-ensemble comprend les symboles transformés associés aux sorties d'indice de même parité de l'étape de transformation complète.

En particulier, si l'on considère un algorithme de transformée de Fourier inverse rapide classique (en anglais IFFT, pour Inverse Fast Fourier Transfom ») de type « Split Radix », mettant en oeuvre une décimation en fréquence, tel que décrit notamment par P. Duhamel et H. Hollmann dans le document « Implementation of "split-radix" FFT algorithms for complex, real, and real symmetric data », « Acoustics, Speech, and Signal Processing », IEEE International Conference ICASSP '85., vol. 10, Avril 1985, pp. 784 - 787, les indices d'entrée de la transformée sont dans l'ordre naturel et les indices de sortie dans un ordre différent, dit « bit reversal ». Dans ce cas, pour une transformée de taille M paire, les M/2 premières sorties présentent des indices pairs. Il est donc possible d'implémenter une transformée de Fourier partielle permettant de calculer uniquement les sorties d'indice pair.

Ainsi, la première sous-étape selon l'invention met par exemple en oeuvre une IFFT partielle de type « Split Radix » mettant en oeuvre une décimation en fréquence, permettant de calculer uniquement la première moitié des sorties du module de transformation fréquence/temps, délivrant un premier sous-ensemble comprenant uniquement les sorties d'indice pair. La deuxième sous-étape permet alors de déduire les sorties d'indice impair, à partir des sorties d'indice pair. Un tel algorithme de type « Split Radix » présente l'avantage d'une grande rapidité.

Bien entendu, d'autres algorithmes de transformation fréquence/temps peuvent également être mis en oeuvre, comme celui proposé par Cooley-Tukey dans le document « An Algorithm for the Machine Calculation of Complex Fourier Series », Math. Computat., 1965. De tels algorithmes peuvent en effet être implantés plus facilement que l'algorithme « Split Radix » sur des composants électroniques.

Selon une caractéristique particulière, le procédé de modulation selon l'invention comprend une étape de prétraitement des symboles de données réels, mise en oeuvre préalablement à ladite étape de transformation complète.

Une telle étape de pré-traitement, encore appelée pré-modulation, met en oeuvre une multiplication des symboles réels par un terme de phase $\left(e^{j\frac{\pi}{2}n}\right)$, permettant d'assurer un déphasage de $\pi/2$ en temps du signal multiporteuse OQAM. Elle met également en oeuvre une multiplication par un terme tenant compte de la longueur du filtre prototype $\left(2Ne^{-j\frac{\pi}{2}m\frac{D-N}{N}}\right)$, permettant de tenir compte de la causalité du filtre prototype ainsi que d'assurer un déphasage de $\pi/2$ en fréquence des porteuses. Un modulateur mettant en oeuvre le procédé de modulation selon l'invention est ainsi physiquement réalisable, puisqu'il est basé sur l'utilisation d'un filtre prototype causal.

En particulier, l'étape d'obtention détermine une première partie du deuxième sous-ensemble à partir d'une première partie du premier sous-ensemble, en utilisant une première relation mathématique, et détermine une deuxième partie du deuxième sous-ensemble à partir d'une deuxième partie du premier sous-ensemble, en utilisant une deuxième relation mathématique, les première et deuxième parties du premier sous-ensemble, respectivement du deuxième sous-ensemble, étant complémentaires.

Par exemple, si l'on considère que le premier sous-ensemble comprend les sorties d'indice pair et le deuxième sous-ensemble les sorties d'indice impair, on utilise la première moitié des sorties d'indice pair pour obtenir la première moitié des sorties d'indice impair à partir d'une première relation mathématique, et on utilise la deuxième moitié des sorties d'indice pair pour obtenir la deuxième moitié des sorties d'indice impair à partir d'une deuxième relation mathématique.

Selon un premier aspect, avec L pair (D impair), on considère un modulateur de type OFDM/OQAM ou BFDM/OQAM avec un paramètre de délai D = L - 1, et un filtre prototype de longueur L égale à qM + 2p, avec q et p des entiers tels que $q \geq 0$ et $0 \leq p \leq M / 2 - 1$ et M divisible par 4. Deux cas sont alors à considérer. Dans le premier cas, on suppose $0 \leq p \leq M / 4 - 1$ les relations suivantes peuvent alors être utilisées pour déduire le deuxième sous-ensemble à partir du premier sous-ensemble :

- première relation mathématique: $u_{M/2+2p-k-1,n} = (-1)^n u_{k,n}^*$, pour un entier $k$ tel que $0 \le k \le M/4 + p - 1$ et

- deuxième relation mathématique : $u_{3M/4+p-k-1,n} = (-1)^n u_{3M/4+p+k,n}^*$, pour un entier $k$ tel que $0 \le k \le M/4 - p - 1$,

avec :

- $u_{m,n}$ un symbole transformé associé à la sortie d'indice $m$ de l'étape de transformation complète à un instant $n$ ;
- \* l'opérateur conjugué.

Dans le deuxième cas où L pair, on considère cette fois que $M/4 \le p \le M/2 - 1$, les relations suivantes peuvent alors être utilisées pour déduire le deuxième sous-ensemble à partir du premier sous-ensemble :

- première relation mathématique: $u_{2p-M/2-k-1,n} = (-1)^n u_{k,n}^*$, pour un entier $k$ tel que $0 \le k \le p - M/4 - 1$ et

- deuxième relation mathématique : $u_{M-k-1,n} = (-1)^n u_{2p-M/2+k,n}^*$, pour un entier $k$ tel que $0 \le k \le 3M/4 - p - 1$,

Selon un deuxième aspect, avec D impair, si l'on considère un modulateur de type BFDM/OQAM avec un paramètre de délai D < L - 1, tel que D = qM + 2p -1, avec L la longueur du filtre prototype, q et p des entiers tels que $q \ge 0$ et $0 \le p \le M/2 - 1$, et si M est divisible par 4, deux cas sont alors à considérer. Dans le premier cas, on suppose $0 \le p \le M/4 - 1$ les relations suivantes peuvent être utilisées pour déduire le deuxième sous-ensemble à partir du premier sous-ensemble :

- première relation mathématique: $u_{M/2+2p-k-1,n} = (-1)^n u_{k,n}^*$, pour un entier $k$ tel que $0 \le k \le M/4 + p - 1$ et

- deuxième relation mathématique : $u_{3M/4+p-k-1,n} = (-1)^n u_{3M/4+p+k,n}^*$, pour un entier $k$ tel que $0 \le k \le M/4 - p - 1$.

Dans le deuxième cas où L pair, on considère cette fois que $M/4 \le p \le M/2 - 1$, les relations suivantes peuvent alors être utilisées pour déduire le deuxième sous-ensemble à partir du premier sous-ensemble :

- première relation mathématique: $u_{2p-M/2-k-1,n} = (-1)^n u_{k,n}^*$, pour un entier $k$ tel que $0 \le k \le p - M/4 - 1$ et

- deuxième relation mathématique : $u_{M-k-1,n} = (-1)^n u_{2p-M/2+k,n}^*$, pour un entier $k$ tel que $0 \le k \le 3M/4 - p - 1$,

Il est ainsi possible d'utiliser l'invention dans des modulateurs présentant des délais D strictement inférieurs à L-1.

Selon un troisième aspect, on considère le cas particulier d'un modulateur de type BFDM/OQAM avec un paramètre de délai D < L - 1, tel que $D = qN - 1$, avec q = 2q'+ 1, q' un entier, M est divisible par 2, et un filtre prototype à phase linéaire de longueur L.

Dans ce cas particulier, une seule relation mathématique peut être utilisée pour déduire le deuxième sous-ensemble à partir du premier sous-ensemble : $u_{M-1-k,n} = (-1)^n u_{k,n}^*$, pour un entier $k$ tel que $0 \le k \le M/2 - 1$.

De plus, dans ce cas particulier de filtre à phase linéaire, le procédé de modulation selon l'invention comprend une étape de filtrage polyphase des M symboles transformés mettant en oeuvre des composantes polyphases telles que $G_k(z) = z^{-(q-1)} G_{M-1-k}(z^{-1})$ pour $0 \le k \le M/2 - 1$.

En d'autres termes, les sorties du module de transformation fréquence/temps sont conjuguées deux à deux, et les composantes polyphases du filtre prototype sont para-conjuguées deux à deux.

Il est donc possible d'utiliser cette symétrie pour réutiliser une partie des résultats des multiplications survenant à des instants de filtrage différents, et réduire ainsi la complexité du filtrage.

L'invention concerne également un programme d'ordinateur comportant des instructions pour l'exécution des étapes du procédé de modulation décrit précédemment, lorsque ledit programme est exécuté par un ordinateur.

En effet, le procédé selon l'invention peut être mis en oeuvre de diverses manières, notamment sous forme câblée ou sous forme logicielle.

Dans un autre mode de réalisation, l'invention concerne un modulateur délivrant un signal multiporteuse de type OQAM.

Selon l'invention, un tel modulateur comprend des moyens de transformation, du domaine fréquentiel vers le domaine temporel, d'un ensemble de M symboles de données réels en M symboles transformés, comprenant :

- des moyens de transformation partielle de l'ensemble de M symboles de données réels, mettant en oeuvre une transformée de Fourier partielle et délivrant un premier sous-ensemble de C symboles transformés, avec C strictement inférieur à M ;
- des moyens d'obtention, à partir du premier sous-ensemble, d'un deuxième sous-ensemble de (M-C) symboles transformés, complémentaire du premier sous-ensemble.

Un tel modulateur est notamment adapté à mettre en oeuvre le procédé de modulation décrit précédemment. Il s'agit par exemple d'un modulateur OFDM/OQAM ou BFDM/OQAM présent dans une chaîne d'émission.

Ce modulateur pourra bien sûr comporter les différentes caractéristiques relatives au procédé de modulation selon l'invention, qui peuvent être combinées ou prises isolément. Ainsi, les caractéristiques et avantages de ce dispositif sont les mêmes que ceux du procédé précédemment décrit. Par conséquent, ils ne sont pas détaillés plus amplement.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, décrite en relation avec l'art antérieur, présente un schéma de modulation OFDM/OQAM classique ;
- la figure 2 illustre les principales étapes du procédé de modulation selon l'invention ;
- les figures 3 et 4 présentent un algorithme de transformation de Fourier rapide inverse de type « Split-Radix » ;
- la figure 5 illustre le principe de réduction de la complexité au niveau du filtrage polyphase ;
- la figure 6 présente la structure simplifiée d'un modulateur mettant en oeuvre une technique de modulation selon un mode de réalisation particulier de l'invention.

## 5. Description d'un mode de réalisation de l'invention

### 5.1 Principe général

Le principe général de l'invention repose sur une mise en oeuvre particulière de l'opération de transformation du domaine fréquentiel vers le domaine temporel au niveau d'un modulateur OFDM/OQAM ou BFDM/OQAM, permettant de limiter la complexité de cette opération.

Pour ce faire, l'invention propose de calculer de manière classique une partie seulement des coefficients en sortie de cette opération de transformation, formant un premier sous-ensemble, et de déduire l'autre partie des coefficients de sortie, formant un deuxième sous-ensemble, à partir de ce premier sous-ensemble.

La figure 2 illustre plus précisément les principales étapes mises en oeuvre par un procédé de modulation selon l'invention, délivrant un signal multiporteuse de type OFDM/OQAM ou BFDM/OQAM. Un tel procédé peut notamment être mis en oeuvre dans un modulateur OFDM/OQAM tel que décrit dans le document précité « Analysis of OFDM/OQAM systems based on the filterbank theory » de P. Siohan et N. Lacaille, ou dans un modulateur BFDM/OQAM tel que décrit dans le document précité « Design of BFDM/OQAM systems based on biorthogonal modulated filter banks » de C. Siclet et P. Siohan.

Selon l'invention, un tel procédé met en oeuvre une étape de transformation 22, du domaine fréquentiel vers le domaine temporel, d'un ensemble de M symboles de données réels délivrant M symboles transformés, dite transformation complète. Il peut être mis en oeuvre dans le modulateur illustré en figure 1, en mettant en oeuvre une étape de transformation complète 22 selon l'invention dans le module IDFT 12.

Ces M symboles de données réels, notés $a_{m,n}$, peuvent subir un pré-traitement préalablement à l'opération de transformation 22, dans un module de pré-traitement 11 tel qu'illustré en figure 1, permettant notamment d'assurer une quadrature en temps et en fréquence des porteuses du signal multiporteuse obtenu en sortie du modulateur, et de tenir compte de la longueur du filtre prototype. En utilisant les mêmes notations que celles définies en relation avec l'art antérieur, les symboles obtenus en sortie de ce module de pré-traitement sont notés $a_{m,n}^{p}$, où

$$a_{m,n}^p = a_{m,n}e^{j\frac{\pi}{2}n}2Ne^{-j\frac{\pi}{2}m\frac{D-N}{N}}$$ En particulier, on a M = 2N.

L'étape de transformation complète 22 selon l'invention met en oeuvre deux sous-étapes :

- une première sous-étape 221 mettant en oeuvre une transformée de Fourier partielle sur l'ensemble de M symboles de données réels, délivrant un premier sous-ensemble de C symboles transformés, avec C strictement inférieur à M ;
- une deuxième sous-étape 222 d'obtention, à partir du premier sous-ensemble, d'un deuxième sous-ensemble de (M-C) symboles transformés, complémentaire du premier sous-ensemble.

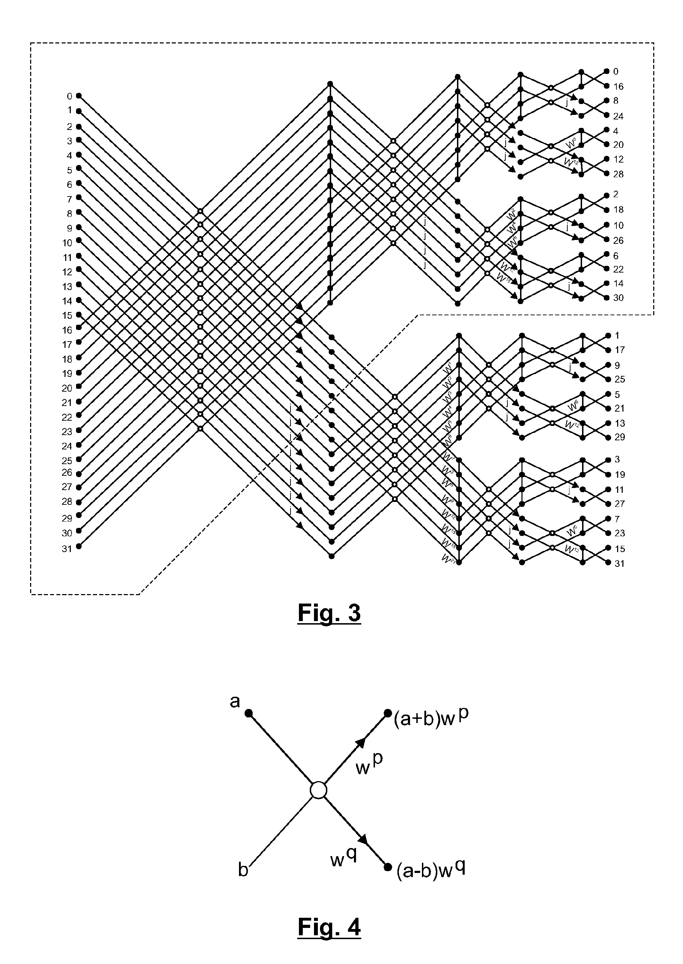

On remarque, comme le montre la figure 3, que les indices des symboles transformés obtenus en sortie de l'étape de transformation complète 22 ne sont pas nécessairement classés dans l'ordre naturel, mais ont subi un entrelacement (en anglais « bit reversal »).

Par exemple, le premier sous-ensemble comprend C=M/2 symboles transformés, notés $u_{0,n}, u_{2,n}, u_{4,n}, ..., u_{M-2,n}$. Le deuxième sous-ensemble, complémentaire du premier sous-ensemble, comprend alors M-C=M/2 symboles transformés, notés $u_{1,n}, u_{3,n}, ..., u_{M-1,n}$.

En effet, les inventeurs ont démontré qu'il existait des relations mathématiques entre les différentes sorties du module de transformation fréquence/temps d'un modulateur OFDM/OQAM ou BFDM/OQAM. Par conséquent, selon leurs travaux, il n'est plus nécessaire de calculer l'ensemble des sorties de ce module, mais possible d'en calculer une partie seulement et de déduire l'autre partie à partir de ces calculs. On exploite ainsi la redondance des informations en sortie d'un module classique de transformation fréquence/temps pour ne pas calculer toutes ses sorties selon l'invention.

Ces relations mathématiques entre les différentes sorties du module de transformation sont notamment dues au fait que les symboles de données $a_{m,n}$ sont réels et au terme particulier de phase $e^{j\frac{\pi}{2}n}e^{-j\frac{\pi}{2}m\frac{D-N}{N}}$ présent à chaque instant $n$ à l'entrée $m$ du module de transformation fréquence/temps.

L'invention permet ainsi de réduire la complexité de l'opération de transformation du domaine fréquentiel vers le domaine temporel, qu'elle soit mise en oeuvre par un algorithme de type « Split Radix » ou un algorithme équivalent, comme l'algorithme de transformation de Fourier rapide inverse proposé par Cooley-Tukey dans le document précité.

*5.2 Cas du modulateur OFDM/OQAM*

*A) Premier exemple d'application : L = qM*

On décrit ci-après un premier exemple d'application de l'invention, considérant un modulateur de type OFDM/OQAM présentant un filtre prototype dont la longueur L est un multiple de la taille de la transformation fréquence/temps M, c'est-à-dire L=qM, avec q un entier, et M divisible par 4.

Dans ce cas, si l'on considère une transformation fréquence/temps classique, de type IFFT par exemple, on a, pour tout entier positif $n$ et *pour $k$ un entier tel que $0 \le k \le M / 4 - 1$* :

$$u_{k,n} = e^{j\frac{\pi}{2}n}\sum_{m=0}^{M-1} a_{m,n}e^{-j\frac{\pi}{2}m\frac{D-N}{N}}e^{j2\pi\frac{mk}{M}}$$

$$u_{k,n} = e^{j\frac{\pi}{2}n}\sum_{m=0}^{M-1} a_{m,n}e^{-j\frac{\pi}{2}m\frac{2qN-1-N}{N}}e^{j2\pi\frac{mk}{M}}$$

$$u_{k,n} = e^{j\frac{\pi}{2}n}\sum_{m=0}^{M-1} a_{m,n}(-1)^{mq}e^{j\frac{\pi m}{2}}e^{j\frac{\pi m}{2N}}e^{j2\pi\frac{mk}{M}}$$

Plus précisément, on obtient les relations suivantes entre les valeurs de la première moitié des sorties de l'IFFT :

$$u_{M/2-1-k,n} = e^{j\frac{\pi}{2}n}\sum_{m=0}^{M-1}a_{m,n}e^{-j\frac{\pi}{2}m\frac{D-N}{N}}e^{j2\pi\frac{m(M/2-1-k)}{M}}$$

$$u_{M/2-1-k,n} = e^{j\frac{\pi}{2}n}\sum_{m=0}^{M-1}a_{m,n}e^{-j\frac{\pi}{2}m\frac{2qN-1-N}{N}}e^{j\pi m}e^{-j\frac{2\pi m}{M}}e^{-j2\pi\frac{mk}{M}}$$

$$u_{M/2-1-k,n} = u_{k,n} = e^{j\frac{\pi}{2}n}\sum_{m=0}^{M-1}a_{m,n}(-1)^{mq}e^{j\frac{3\pi m}{2}}e^{-j\frac{\pi m}{2N}}e^{-j2\pi\frac{mk}{M}}$$

$$u_{M/2-1-k,n} = (-1)^n u_{k,n}^{*}$$

où l'opérateur * correspond à l'opérateur conjugué.

On note également la relation suivante : $e^{j\frac{3\pi m}{2}} = \left(e^{j\frac{\pi m}{2}}\right)^{*}$.

Pour tout entier positif *n* et *pour k* un entier tel que $0 \le k \le M/4 - 1$, on obtient les relations suivantes entre les valeurs de la deuxième moitié des sorties de l'IFFT :

$$u_{3M/4-1-k,n} = e^{j\frac{\pi}{2}n}\sum_{m=0}^{M-1}a_{m,n}e^{-j\frac{\pi}{2}m\frac{D-N}{N}}e^{j2\pi\frac{m(3M/4-1-k)}{M}}$$

$$u_{3M/4-1-k,n} = e^{j\frac{\pi}{2}n}\sum_{m=0}^{M-1}a_{m,n}e^{-j\frac{\pi}{2}m\frac{2qN-1-N}{N}}e^{j\frac{3\pi}{2}m}e^{-j\frac{2\pi m}{M}}e^{-j2\pi\frac{mk}{M}}$$

$$u_{3M/4-1-k,n} = e^{j\frac{\pi}{2}n}\sum_{m=0}^{M-1}a_{m,n}(-1)^{mq}e^{-j\frac{\pi m}{2N}}e^{-j2\pi\frac{mk}{M}}$$

et :

$$u_{3M/4+k,n} = e^{j\frac{\pi}{2}n}\sum_{m=0}^{M-1}a_{m,n}e^{-j\frac{\pi}{2}m\frac{D-N}{N}}e^{j2\pi\frac{m(3M/4+k)}{M}}$$

$$u_{3M/4+k,n} = e^{j\frac{\pi}{2}n}\sum_{m=0}^{M-1}a_{m,n}e^{-j\frac{\pi}{2}m\frac{2qN-1-N}{N}}e^{j\frac{3\pi}{2}m}e^{j2\pi\frac{mk}{M}}$$

$$u_{3M/4+k,n} = e^{j\frac{\pi}{2}n} \sum_{m=0}^{M-1} a_{m,n} (-1)^{mq} e^{j\frac{\pi m}{2N}} e^{j2\pi\frac{mk}{M}}$$

$$u_{3M/4+k,n} = (-1)^n u^*_{3M/4-1-k,n}$$

Par conséquent, considérant les relations $u_{M/2-1-k,n} = (-1)^n u^*_{k,n}$ et $u_{3M/4+k,n} = (-1)^n u^*_{3M/4-1-k,n}$, il suffit selon l'invention :

- de calculer un premier sous-ensemble des sorties ($u_{k,n}$ et $u_{3M/4-1-k,n}$, pour $0 \le k \le M/4 - 1$) au cours de la première sous-étape 221,
- d'en déduire un deuxième sous-ensemble des sorties ($u_{M/2-1-k,n}$ ct $u_{3M/4+k,n}$, pour $0 \le k \le M/4 - 1$), complémentaire du premier sous-ensemble, au cours de la deuxième sous-étape 222, en utilisant les relations précitées,

pour obtenir ainsi l'ensemble des sorties de l'étape de transformation fréquence/temps 22.

Selon cet exemple, il suffit ainsi de calculer la moitié des sorties en utilisant une transformée de Fourier partielle (en anglais « pruned IFFT ») au cours de la première sous-étape 221, pour obtenir à l'issue de la deuxième sous-étape 222 toutes les sorties de l'étape de transformation fréquence/temps 22.

Une façon efficace de mise en oeuvre de l'invention consiste à calculer, au cours de la première sous-étape 221, les sorties de l'étape de transformation fréquence/temps 22 d'indice de même parité. Avec ce choix, aucune donnée n'est perdue puisque les relations précitées permettent de relier deux à deux des sorties d'indice de parité différente (par exemple, si M égal 8, la sortie $u_{3,n}$ d'indice impair est liée à la sortie $u_{0,n}$ d'indice pair, selon l'équation $u_{M/2-1-k,n} = (-1)^n u^*_{k,n}$).

A titre d'exemple, on considère un modulateur multiporteuse OQAM, mettant en oeuvre une transformation fréquence/temps de taille M égal 32, telle qu'illustrée en figure 3.

Si l'on considère le cas « classique », mettant en oeuvre une IFFT à l'aide d'un algorithme de type Split-Radix, on calcule M sorties à partir de M entrées correspondant aux indices 0 à 31. Un tel algorithme se traduit par une complexité opératoire correspondant à $M \log_2 M - 3M + 4$ multiplications réelles et $3M \log_2 M - 3M + 4$ additions réelles.

Selon l'invention, plutôt que calculer ces M sorties, on calcule uniquement la première moitié des sorties, correspondant aux sorties d'indice pair. En utilisant les relations précitées, il est alors possible de déduire la deuxième moitié des sorties, correspondant aux sorties d'indices impairs, puisque les relations précitées permettent de relier deux à deux des sorties d'indice de parité différente.

Ce principe de réduction de la complexité s'applique également si l'on considère un filtre prototype de longueur $L = (2q + 1)N$. En effet, dans ce cas, les relations entre les sorties de parités différentes sont toujours vérifiées, mais entre des indices différents.

*B) Deuxième exemple d'application : $L = qM + q_1$*

On décrit ci-après un deuxième exemple d'application de l'invention, considérant un modulateur OFDM/OQAM présentant un filtre prototype dont la longueur L est, de manière plus générale, de la forme $L=qM+q_1$, avec q et $q_1$ des entiers tels que $q \ge 0$ et $0 \le q1 \le M - 1$, et M divisible par 4.

On considère tout d'abord le cas où $q_1$ est pair.

On peut alors écrire $L = qM + 2p$, avec dans un premier cas $0 \le p \le M/4 - 1$.

Dans ce cas, si l'on développe un calcul similaire à celui développé pour le premier exemple, pour tout entier positif *n* et *pour k* un entier tel que $0 \le k \le M/4 + p - 1$, on a :

$$u_{k,n} = e^{j\frac{\pi}{2}n} \sum_{m=0}^{M-1} a_{m,n} (-1)^{mq} e^{j\frac{\pi m}{2}} e^{j\frac{\pi m}{2N}} e^{j2\pi\frac{m(k-p)}{M}}$$

On obtient donc les relations suivantes entre les valeurs de la première moitié des sorties de l'IFFT :

$$u_{M/2+2p-k-1,n} = e^{j\frac{\pi}{2}n} \sum_{m=0}^{M-1} a_{m,n} (-1)^{mq} e^{j\frac{3\pi m}{2}} e^{-j\frac{\pi m}{2N}} e^{-j2\pi\frac{m(k-p)}{M}}$$

$$u_{M/2+2p-k-1,n} = (-1)^n u_{k,n}^*$$

Pour tout entier positif $n$ et *pour k* un entier tel que $0 \leq k \leq M / 4 - p - 1$, on obtient les relations suivantes entre les valeurs de la deuxième moitié des sorties de l'IFFT :

$$u_{3M/4+p+k,n} = e^{j\frac{\pi}{2}n} \sum_{m=0}^{M-1} a_{m,n} (-1)^{mq} e^{j\frac{\pi m}{2N}} e^{j2\pi\frac{mk}{M}}$$

$$u_{3M/4+p-k-1,n} = e^{j\frac{\pi}{2}n} \sum_{m=0}^{M-1} a_{m,n} (-1)^{mq} e^{-j\frac{\pi m}{2N}} e^{-j2\pi\frac{mk}{M}}$$

$$u_{3M/4+p-k-1,n} = (-1)^n u_{3M/4+p+k,n}^*$$

Par conséquent, considérant les relations $u_{M/2+2p-k-1,n} = (-1)^n u_{k,n}^*$ et $u_{3M/4+p-k-1,n} = (-1)^n u_{3M/4+p+k,n}^*$, il suffit selon l'invention :

- de calculer un premier sous-ensemble des sorties ($u_{k,n}$ pour $0 \leq k \leq M / 4 + p - 1$, et $u_{3M/4+p+k,n}$ pour $0 \leq k \leq M / 4 - p$ -1) au cours de la première sous-étape 221,
- d'en déduire un deuxième sous-ensemble des sorties ($u_{M/2+2p-k-1,n}$ pour $0 \leq k \leq M / 4 + p - 1$ et $u_{3M/4+p-k-1,n}$ pour $0 \leq k \leq M / 4 - p - 1$) complémentaire du premier sous-ensemble, au cours de la deuxième sous-étape 222, en utilisant les relations précitées,

pour obtenir ainsi l'ensemble des sorties de l'étape de transformation fréquence/temps 22.

On peut aussi écrire L = qM + 2p, avec dans un deuxième cas $M / 4 \leq p \leq M / 2 - 1$.

Dans ce cas, si l'on développe un calcul similaire au précédent pour tout entier positif $n$ et *pour k* un entier tel que $0 \leq k \leq p - M / 4 - 1$ , on a :

$$u_{k,n} = e^{j\frac{\pi}{2}n} \sum_{m=0}^{M-1} a_{m,n} (-1)^{mq} e^{j\frac{\pi m}{2}} e^{j\frac{\pi m}{2N}} e^{j2\pi\frac{m(k-p)}{M}}$$

On obtient donc les relations suivantes entre les valeurs de la première moitié des sorties de l'IFFT :

$$u_{2p-M/2-k-1,n} = e^{j\frac{\pi}{2}n} \sum_{m=0}^{M-1} a_{m,n} (-1)^{mq} e^{j\frac{\pi m}{2}} e^{j\frac{\pi m}{2N}} e^{-j\frac{2\pi mp}{2N}} e^{j2\pi\frac{m(2p-M/2-k-1)}{M}}$$

$$u_{2p-M/2-k-1,n} = e^{j\frac{\pi}{2}n} \sum_{m=0}^{M-1} a_{m,n} (-1)^{mq} e^{-j\frac{\pi m}{2}} e^{-j\frac{\pi m}{2N}} e^{j2\pi\frac{m(p-k)}{M}}$$

$$u_{2p-M/2-k-1,n} = (-1)^n u_{k,n}^*$$

Pour tout entier positif *n* et *pour k* un entier tel que $0 \le k \le 3M/4 - p - 1$, on obtient les relations suivantes entre les valeurs de la deuxième moitié des sorties de l'IFFT :

$$u_{2p+k-M/2,n} = e^{j\frac{\pi}{2}n} \sum_{m=0}^{M-1} a_{m,n} (-1)^{mq} e^{j\frac{\pi m}{2}} e^{j\frac{\pi m}{2N}} e^{-j\frac{2\pi mp}{2N}} e^{j2\pi\frac{m(2p+k-M/2)}{M}}$$

$$u_{2p+k-M/2,n} = e^{j\frac{\pi}{2}n} \sum_{m=0}^{M-1} a_{m,n} (-1)^{mq} e^{-j\frac{\pi m}{2}} e^{j\frac{\pi m}{2N}} e^{j2\pi\frac{m(p+k)}{M}}$$

Et

$$u_{M-1-k,n} = e^{j\frac{\pi}{2}n} \sum_{m=0}^{M-1} a_{m,n} (-1)^{mq} e^{j\frac{\pi m}{2N}} e^{-j\frac{2\pi mp}{2N}} e^{j2\pi\frac{m(M-1-k)}{M}}$$

$$u_{M-1-k,n} = e^{j\frac{\pi}{2}n} \sum_{m=0}^{M-1} a_{m,n} (-1)^{mq} e^{-j\frac{\pi m}{2N}} e^{-j2\pi\frac{m(k+p)}{M}}$$

$$u_{M-1-k,n} = (-1)^n u_{2p+k-M/2,n}^*$$

Par conséquent, considérant les relations $u_{2p-M/2-k-1,n} = (-1)^n u_{k,n}^*$ et $u_{M-1-k,n} = (-1)^n u_{2p+k-M/2,n}^*$, il suffit selon l'invention :

- de calculer un premier sous-ensemble des sorties ($u_{k,n}$, pour $0 \le k \le p - M/4 - 1$, et $u_{2p+k-M/2,n}$ pour $0 \le k \le 3M/4 - p - 1$) au cours de la première sous-étape 221,
- d'en déduire un deuxième sous-ensemble des sorties ($u_{2p-M/2-k-1,n}$ pour $0 \le k \le p - M/4 - 1$ et $u_{M-1-k,n}$ pour $0 \le k \le 3M/4 - p - 1$) complémentaire du premier sous-ensemble, au cours de la deuxième sous-étape 222, en utilisant les relations précitées,

pour obtenir ainsi l'ensemble des sorties de l'étape de transformation fréquence/temps 22.

Selon cet exemple, il suffit ainsi de calculer la moitié des sorties en utilisant une transformée de Fourier partielle au cours de la première sous-étape 221, pour obtenir à l'issue de la deuxième sous-étape 222 toutes les sorties de l'étape de transformation fréquence/temps 22.

A nouveau, on remarque que les relations précitées permettent de relier deux à deux des sorties d'indice de parité différente.

Comme décrit en relation avec le premier exemple, une façon efficace de mise en oeuvre de l'invention consiste à calculer, au cours de la première sous-étape 221, les sorties de l'étape de transformation fréquence/temps 22 d'indice de même parité, par exemple les sorties d'indice pair, puis d'en déduire les sorties d'indice impair.

Le principe de réduction de la complexité appliqué au cas où la longueur du filtre prototype est un multiple de la taille de l'opération de transformation (L = qM) selon le premier exemple reste donc valable dans le cas où L = qM + 2p.

Ce principe de réduction de la complexité est mis en oeuvre différemment dans le cas où $q_1$ est impair.

En effet, dans ce cas, on peut écrire L = qM + 2p +1, et les sorties du module de transformation peuvent s'exprimer sous la forme suivante, pour $0 \leq k \leq M$ - 1 :

$$u_{k,n} = e^{j\frac{\pi}{2}n} \sum_{m=0}^{M-1} a_{m,n}(-1)^{mq} e^{j\frac{\pi m}{2}} e^{j2\pi\frac{m(k-p)}{M}}$$

Comme proposé dans le brevet FR-97 08547 déposé le 1/07/97 et intitulé « *Procédé et dispositif de modulation d'un signal multiporteuse de type OFDM/OQAM, et procédé et dispositif de démodulation correspondant* », les sorties du module de transformation peuvent être obtenues au moyen d'une IFFT prenant en entrée des réels ($a_{m,n}(-1)^{mq}$), et en appliquant une permutation circulaire à la sortie. Cette permutation est un décalage circulaire à gauche de $M$ / 4 - $p$ si $0 \leq p \leq M$ / 4 -1 et un décalage circulaire à droite de $p$ - $M$ / 4 si $M$ / 4 $\leq p \leq M$ / 2 - 1. En d'autres termes, si on prend le cas où $0 \leq p \leq M$ / 4 - 1 la sortie de l'IFFT correspondant à l'indice 0 remplace la sortie correspondant à l'indice $M$ / 4 - $p$, la sortie correspondant à l'indice 1 remplace la sortie correspondant à l'indice $M$ / 4 - $p$ + 1, etc.

Dans ce cas, la réduction de la complexité vient du fait de la possibilité d'utiliser une IFFT aux entrées réelles et non complexes. En utilisant un algorithme de type « Split radix » tel que présenté précédemment, la complexité opératoire est donc réduite de moitié.

On peut également noter que l'expression précédente prend en compte la longueur du filtre prototype et permet donc d'obtenir directement une réalisation causale, ce qui n'est pas le cas dans le brevet précité.

*5.3 Cas du modulateur BFDM/OQAM*

Le procédé selon l'invention peut également être mis en oeuvre dans un modulateur de type BFDM/OQAM, pour lequel les filtres prototypes utilisés en émission et en réception peuvent être différents. Le principe de réduction de la complexité, décrit précédemment pour le cas orthogonal OFDM/OQAM s'applique donc également au cas bi-orthogonal.

Dans ce cas, le paramètre de délai D, utilisé en entrée du module de transformation fréquence/temps, est plus flexible, et peut être tel que $D \leq L$ - 1, avec L la longueur du filtre prototype d'émission.

$$A) \qquad D = L - 1$$

Si l'on considère tout d'abord un délai tel que $D = L$ - 1*,* on obtient en sortie du module de transformation fréquence/temps les relations définies précédemment dans le deuxième exemple d'application si $q_1$ est pair, à savoir :

$$u_{M/2+2p-k-1,n} = (-1)^n u_{k,n}^* \text{ pour } 0 \leq k \leq M / 4 + p - 1$$

$$u_{3M/4+p-k-1,n} = (-1)^n u_{3M/4+p+k,n}^* \text{ pour } 0 \leq k \leq M / 4 - p - 1.$$

avec $0 \leq p \leq M$ / 4 - 1.
Et pour le deuxième cas lorsque $M$ / 4 $\leq p \leq M$ / 2 - 1

$$u_{2p-M/2-k-1,n} = (-1)^n u_{k,n}^* \text{ pour } 0 \leq k \leq p - M / 4 - 1$$

$$u_{M-1-k,n} = (-1)^n u_{2p+k-M/2,n}^* \text{ pour } 0 \leq k \leq 3M / 4 - p - 1$$

*B) D<L-1*

Si le délai est tel que $D < L - 1$, ces relations diffèrent, selon la forme du délai.

Plus précisément, on note $D = qM + q_1 - 1$, et on étudie les différents cas :

- si $q_1$ est pair, alors le délai est de la forme $D = qM + 2p - 1$ et on retrouve les relations définies précédemment dans le deuxième exemple d'application dans le cas où $L = qM + 2p$ ;

  o- si $q_1$ est impair, alors le délai est de la forme $D = qM + 2p$ et on retrouve les relations définies précédemment dans le deuxième exemple d'application dans le cas où $L = qM + 2p + 1$. Deux cas sont à considérer suivant l'intervalle de valeurs de p.

  a. Si $0 \leq p \leq M / 4 - 1$, les sorties du module de transformation peuvent être obtenues en utilisant une transformation réelle suivie d'une permutation circulaire à gauche de $M / 4 - p$ ;
  b. Si $M / 4 \leq p \leq M / 2 - 1$, les sorties du module de transformation peuvent être obtenues en utilisant une transformation réelle suivie d'une permutation circulaire à droite de $p - M / 4$ ;

A titre d'exemple, on considère un modulateur de type BFDM/OQAM mettant en oeuvre un filtre prototype à phase linéaire en émission de longueur L, et de délai D strictement inférieur à L - 1.

Si le délai est de la forme $D = qM + 2p - 1$, avec $2p = \dfrac{M}{2} = N$ , alors on obtient, en utilisant les équations de la section 5.3 B), une relation entre les sorties d'indices $k$ et $M - 1 - k$ du module de transformation fréquence/temps.

Plus précisément, pour le deuxième cas où $M / 4 \leq p \leq 3M / 4 - 1$, la première relation obtenue pour $0 \leq k \leq p - M / 4 - 1$ conduit à un cas impossible ($0 \leq k \leq - 1$), et ne peut donc pas s'appliquer. En revanche, la deuxième relation obtenue pour $0 \leq k \leq 3M / 4 - p - 1$ s'applique, et conduit à $u_{M-1-k,n} = (-1)^n u^*_{k+2p-M/2,n} = (-1)^n u^*_{k,n}$ pour $0 \leq k \leq M / 2 - 1$.

Par conséquent, considérant la relation $u_{M-1-k,n} = (-1)^n u^*_{k,n}$ , il suffit selon l'invention :

- de calculer un premier sous-ensemble des sorties ($u_{k,n}$, pour $0 \leq k \leq M / 2 - 1$) au cours de la première sous-étape 221,
- d'en déduire un deuxième sous-ensemble des sorties ($u_{M-1-k,n}$ pour $0 \leq k \leq M / 2 - 1$), complémentaire du premier sous-ensemble, au cours de la deuxième sous-étape 222, en utilisant la relation précitée,

pour obtenir ainsi l'ensemble des sorties de l'étape de transformation fréquence/temps 22.

*C) Simplification du filtrage polyphase*

On se place à nouveau dans le contexte d'un modulateur de type BFDM/OQAM mettant en oeuvre un filtre prototype à phase linéaire en émission de longueur L, dont le délai est choisi tel que $D = qN - 1$, avec $q = 2q'+1$ et q' entier.

On rappelle que, classiquement, les composantes polyphases $G_l(z)$ du filtre prototype $h[n]$ sont définies par

$$G_l(z) = \sum_n h[l + nM]z^{-n}$$

Toutefois, comme le filtre prototype en émission est à phase linéaire, on en déduit que ses composantes polyphases peuvent s'exprimer sous la forme suivante, pour $0 \leq k \leq M / 2 - 1$ :

$$G_k(z) = z^{-(q-1)}G_{M-1-k}(z^{-1}).$$

Les composantes polyphases sont donc para-conjuguées. Il est alors possible de simplifier l'implémentation de ce filtre polyphase. L'utilisation de cette symétrie permet en effet de réduire par deux le nombre de multiplications à réaliser pour un filtre prototype.

Plus précisément, les sorties du module de transformation fréquence/temps sont liées par la relation $u_{M-1-k,n} = (-1)^n u^*_{k,n}$ . Les sorties du module de transformation fréquence/temps sont donc conjuguées deux à deux, et filtrées par des composantes polyphases para-conjugées. Par suite, on en déduit qu'il existe des multiplications communes mais à des instants différents de filtrage. Le nombre de ces multiplications communes durant le filtrage est égal à la moitié des multiplications globales, et par conséquent, on peut réduire de moitié le nombre de multiplications durant cette phase.

Il faut noter toutefois noter qu'une mémoire supplémentaire est nécessaire pour stocker les multiplications à chaque instant de filtrage.

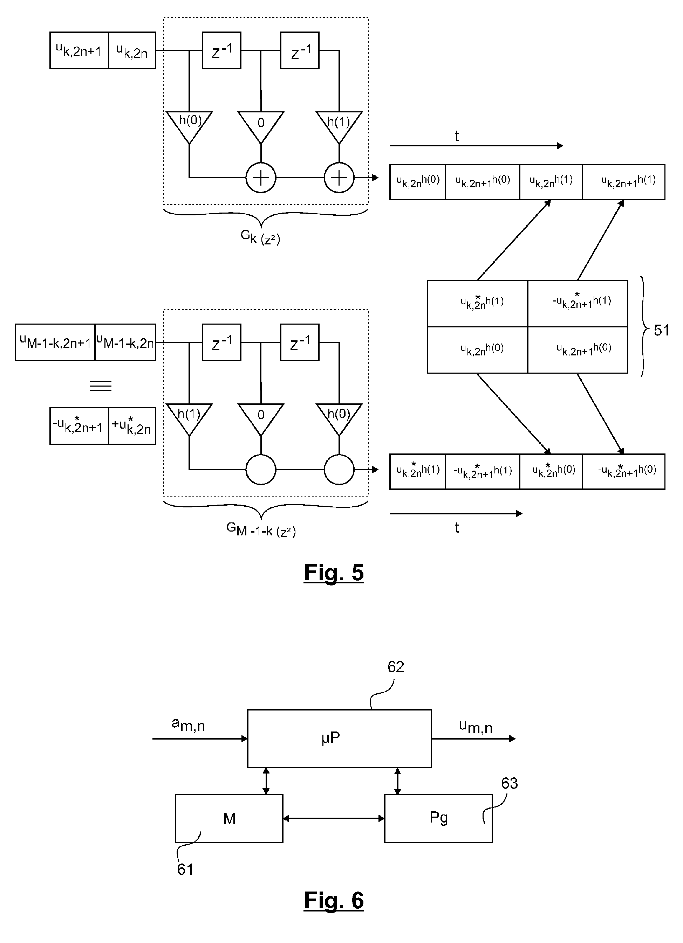

La figure 5 illustre plus précisément l'utilisation d'une telle mémoire.

On considère à titre d'exemple uniquement deux sorties $u_{k,n}$ et $u_{M\text{-}1\text{-}k,n}$ du module de transformation mathématique 22, à deux instants différents $2n$ et $2n+1$. On considère également un filtre prototype de longueur L = qM = 2M. Chaque composante polyphase $G_k(z)$ est donc composée de deux coefficients (h(0) et h(1)). On note que la multiplication par un coefficient nul est liée au filtrage qui s'effectue à cadence double par $G_k(z^2)$.

D'après cet exemple, on constate qu'à la sortie de la composante $G_k(z^2)$ du filtre polyphase, on obtient les symboles filtrés suivants :

$$u_{k,2n}h(0),\ u_{k,2n+1}h(0),\ u_{k,2n}h(1),\ u_{k,2n+1}h(1)$$

A la sortie de la composante $G_{M\text{-}1\text{-}k}(z^2)$ du filtre polyphase, on obtient les symboles filtrés suivants :

$$u^*_{k,2n}h(1),\ u^*_{k,2n+1}h(1),\ u^*_{k,2n}h(0),\ u^*_{k,2n+1}h(0)$$

En effet, on rappelle que les sorties du module de transformation fréquence/temps sont liées par la relation $u_{M-1-k,n} = (-1)^n u^*_{k,n}$ et les composantes polyphases sont liées par la relation $G_k(z) = z^{-(q-1)}G_{M-1-k}(z^{-1})$, pour $0 \leq k \leq M/2 - 1$.

Il y a donc une redondance dans les informations à calculer, et la complexité de filtrage peut être réduite de moitié. Plus précisément, il est possible de calculer les symboles filtrés $u_{k,2n}h(0)$, $u_{k,2n+1}h(0)$, $u^*_{k,2n}h(1)$ et $u^*_{k,2n+1}h(1)$ et de les stocker dans une mémoire 51, puis d'utiliser cette mémoire pour déterminer les symboles filtrés $u_{k,2n}h(1)$, $u_{k,2n+1}h(1)$, $u^*_{k,2n}h(0)$ et $u^*_{k,2n+1}h(0)$.

Autrement dit, si l'on considère un filtre prototype de longueur L = qM et de délai D = q'N - 1, avec $q' = 2q''+1$, et q''<q, le nombre de multiplication complexe est égal à 2qM (au lieu de 4qM).

*5.3 Modification du terme de phase*

Dans les exemples présentés ci-dessus dans le cas d'une modulation OFDM/OQAM ou BFDM/OQAM, le terme de phase était choisi tel que $\phi_{m,n} = \dfrac{\pi}{2}(m+n)$.

Bien entendu, l'invention s'applique également pour un terme de phase tel que $\phi_{m,n} = \dfrac{\pi}{2}(m+n) + \varepsilon\pi mn$, avec $\varepsilon \in \{0, 1, -1\}$.

De façon plus générale, le terme de phase $\phi_{m,n}$ peut être choisi de sorte que la différence de phase entre une position $(m,n)$ du plan temps-fréquence et les quatre positions voisines les plus proches {$(m + 1,n)$, $(m - 1, n)$, $(m, n + 1)$, $(m, n - 1)$}soit égale à $\pm \pi/2$.

*5.4 Performances et terme de complexité*

Comme présenté dans les exemples ci-dessus, il suffit de calculer un premier sous-ensemble de sorties du module de transformation fréquence/temps pour obtenir l'ensemble des sorties de ce module. Par exemple, il suffit de calculer les sorties d'indice pair du module de transformation fréquence/temps.

En utilisant le principe d'élagage ou de transformée partielle (« pruning » en anglais), il est donc possible de réduire la complexité de la plupart des algorithmes rapides de type IFFT qui sont utilisés en pratique pour la mise en oeuvre de cette transformation fréquence/temps.

A titre illustratif, on se réfère à nouveau à la figure 3, afin d'illustrer le procédé proposé dans le cas de l'algorithme IFFT « Split Radix » de type décimation en fréquence (DIF).

On rappelle tout d'abord que :

- pour une transformation de taille $M = 2^r$, on a $r$ étages de calculs. Selon l'exemple illustré en figure 3, il y a cinq étages de calcul (M = 32 et r = 5) ;
- les calculs nécessaires à chaque étage comprennent des additions et multiplications complexes qui se symbolisent par la structure répétitive de la figure 3 sous forme de papillons, avec les notations illustrées en figure 4, où

$$W_M = e^{j\frac{2\pi}{M}}$$ pour une IFFT et $$W_M = e^{-j\frac{2\pi}{M}}$$ pour une FFT ;

- pour cet algorithme de type DIF, les sorties d'indice pair sont obtenues en partie supérieure de l'IFFT.

Comme déjà indiqué, il suffit selon l'invention de calculer les sorties d'indice pair du module de transformation fréquence/temps (soit les M/2 premières sorties), pour pouvoir obtenir l'ensemble des sorties du module de transformation, que l'on considère un modulateur OFDM/OQAM ou BFDM/OQAM.

On démontre ci-après que le coût opératoire pour une IFFT élaguée de taille M se réduit à celui d'une IFFT non élaguée de taille M/2, plus M/2 additions complexes. Ceci se vérifie visuellement sur la figure 3, sur laquelle on voit qu'on peut éliminer toute la moitié inférieure classiquement utilisée pour calculer les sorties d'indice impair.

La démonstration ci-après est appliquée à une FFT, mais se déduit de manière duale pour une IFFT.

Plus précisément, pour une séquence temporelle $x(m)$ avec $m = 0,..., M - 1$, la FFT est donnée par :

$$X(k) = \sum_{m=0}^{M-1} x(m)W_M^{mk} \text{ , pour } k = 0,..., M - 1 \text{, avec } W_M = e^{-j\frac{2\pi}{M}}.$$

D'après le document « *Implementation of "split-radix" FFT algorithms for complex, real, and real symmetric data* » précité, cette équation peut se décomposer sous la forme suivante :

$$\begin{cases} X(2k) &= \sum_{m=0}^{M/2-1}(x(m) + x(m + M/2))W_{M/2}^{mk} \\ X(4k+1) &= \sum_{m=0}^{M/4-1}[x_R(m) + jx_I(m)]W_M^{m}W_{M/4}^{mk} \\ X(4k+3) &= \sum_{m=0}^{M/4-1}[x_R(m) - jx_I(m)]W_M^{3m}W_{M/4}^{mk} \end{cases}$$

avec $x_R(m) = (x(m) - x(m + M/2))$ et $x_I(m) = (x(m + M/4) - x(m + 3M/4))$.

Cette décimation en fréquence permet de décomposer une FFT de taille M en une FFT de taille M/2 et deux FFTs de taille M/4. On remarque qu'à chaque décomposition, le calcul des fréquences impaires a un coût de :

- $M/2-4$ multiplications complexes (la multiplication par $W_M^m$ et $W_M^{3m}$ pour $m \neq \{0, M/8\}$), où une multiplication complexe $M_c$ est équivalente à trois multiplications réelles $M_r$ et trois additions réelles $A_r$, et
- deux multiplications par la racine huitième de l'unité, où chaque multiplication est équivalente à deux multiplications réelles $M_r$ et deux additions réelles $A_r$.

On peut remarquer qu'il est préférable de calculer les fréquences paires, car elles nécessitent moins de calculs que les fréquences impaires.

D'après l'équation de la FFT décomposée sous la forme ($X(2k)$, $X(4k + 1)$, $X(4k + 3)$), le coût pour calculer les fréquences paires est équivalent à calculer une FFT de taille M/2 (i.e. uniquement les coefficients $X(2k)$) ainsi que M/2 additions complexes pour obtenir les entrées de cette FFT ($x(m) + x(m + M/2)$, pour $m = 0,.... M/2 - 1$).

Or on sait que la complexité pour calculer une FFT de taille M en utilisant l'algorithme de type « split radix » est égale à ($M \log_2 M - 3M + 4$) multiplications réelles et ($3M \log_2 M - 3M + 4$) additions réelles.

Par suite, en calculant une FFT de taille M/2 avec M/2 additions complexes à l'entrée au lieu d'une FFT de taille M, on réduit la complexité de ($M \log_2 M - 3M + 4$) à (($M/2)\log_2 M - 2M + 4$) multiplications réelles, soit un gain supérieur à 50%, et de ($3M \log_2 M - 3M + 4$) à (($3M/2)\log_2 M - 2M + 4$) additions réelles, soit encore un gain supérieure à 50%.

De manière duale, en calculant une IFFT partielle de taille M/2 selon l'invention, au lieu d'une IFFT de taille M selon l'art antérieur, on réduit la complexité de *(M log$_2$ M - 3M + 4)* à *((M / 2)log$_2$ M - 2M + 4)* multiplications réelles et de (3*M log$_2$ M* - 3*M* + 4) à ((3*M* / 2) *log$_2$ M* - 2*M* + 4) additions réelles.

*5.5 Structure du modulateur*

On présente finalement, en relation avec la figure 6, la structure simplifiée d'un modulateur OFDM/OQAM ou BFDM/OQAM mettant en oeuvre une technique de modulation selon un exemple d'application décrit ci-dessus.

Un tel modulateur comprend une mémoire 61 comprenant une mémoire tampon, une unité de traitement 62, équipée par exemple d'un microprocesseur $\mu P$, et pilotée par le programme d'ordinateur 63, mettant en oeuvre le procédé de modulation selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée M symboles de données réels $a_{m,n}$. Le microprocesseur de l'unité de traitement 62 met en oeuvre les étapes du procédé de modulation décrit précédemment, selon les instructions du programme d'ordinateur 63, pour effectuer une transformation du domaine fréquentiel vers le domaine temporel des symboles de données, délivrant des symboles transformés $u_{m,n}$. Pour cela, le modulateur comprend, outre la mémoire tampon 61, des moyens de transformation partielle de l'ensemble de M symboles de données réels, mettant en oeuvre une transformée de Fourier partielle et délivrant un premier sous-ensemble de C symboles transformés, avec C strictement inférieur à M, et des moyens d'obtention, à partir du premier sous-ensemble, d'un deuxième sous-ensemble de (M-C) symboles transformés, complémentaire du premier sous-ensemble.

Ces moyens sont pilotés par le microprocesseur de l'unité de traitement 62.

## Revendications

1. Procédé de modulation délivrant un signal multiporteuse de type OQAM, qui met en oeuvre une étape de transformation, du domaine fréquentiel vers le domaine temporel, d'un ensemble de M symboles de données réels délivrant un ensemble de M symboles transformés, dite transformation complète,
   ladite étape de transformation complète (22) comprenant les sous-étapes suivantes :

   - application d'une transformée de Fourier partielle (221) audit ensemble de M symboles de données réels, délivrant un premier sous-ensemble de C symboles transformés dudit ensemble de M symboles transformés, avec C strictement inférieur à M ;
   - obtention (222), à partir dudit premier sous-ensemble, d'un deuxième sous-ensemble de (M-C) symboles transformés dudit ensemble de M symboles transformés, ledit deuxième sous-ensemble de (M-C) symboles transformés étant le sous-ensemble complémentaire dudit premier sous-ensemble de C symboles transformés dudit ensemble de M symboles transformés.

2. Procédé de modulation selon la revendication 1, **caractérisé en ce que** lesdits premier et deuxième sous-ensembles présentent une taille identique.

3. Procédé de modulation selon la revendication 1, **caractérisé en ce que** ledit premier sous-ensemble comprend les symboles transformés associés aux sorties d'indice de même parité de ladite étape de transformation complète.

4. Procédé de modulation selon la revendication 1, **caractérisé en ce qu'**il comprend une étape de prétraitement desdits symboles de données réels mise en oeuvre préalablement à ladite étape de transformation complète.

5. Procédé de modulation selon la revendication 1, **caractérisé en ce que** ladite étape d'obtention détermine une première partie dudit deuxième sous-ensemble à partir d'une première partie dudit premier sous-ensemble, en utilisant une première relation mathématique,
   et détermine une deuxième partie dudit deuxième sous-ensemble à partir d'une deuxième partie dudit premier sous-ensemble, en utilisant une deuxième relation mathématique,
   lesdites première et deuxième parties dudit premier sous-ensemble, respectivement dudit deuxième sous-ensemble, étant complémentaires.

6. Procédé de modulation selon la revendication 5, **caractérisé en ce que**, pour un filtre prototype de longueur L égale à qM + 2p, avec q et p des entiers tels que $q \geq 0$ et $0 \leq p \leq M / 2 - 1$, et M divisible par 4,

si $0 \leq p \leq M / 4 - 1$, alors ladite première relation mathématique s'exprime sous la forme

$$u_{M/2+2p-k-1,n} = (-1)^n u_{k,n}^*$$, pour un *entier k* tel que $0 \leq k \leq M / 4 + p - 1$ et

ladite deuxième relation mathématique s'exprime sous la forme $u_{3M/4+p-k-1,n} = (-1)^n u_{3M/4+p+k,n}^*$,

pour un *entier k* tel que $0 \leq k \leq M / 4 - p - 1$,

sinon si $M / 4 \leq p \leq M / 2 - 1$, alors ladite première relation mathématique s'exprime sous la forme

$$u_{2p-M/2-k-1,n} = (-1)^n u_{k,n}^*$$, pour un entier k tel que $0 \leq k \leq p - M / 4 - 1$ et

ladite deuxième relation mathématique s'exprime sous la forme $u_{M-1-k,n} = (-1)^n u_{2p+k-M/2,n}^*$, pour un entier k tel que $0 \leq k \leq 3M / 4 - p - 1$,

avec :

- $u_{m,n}$ un symbole transformé associé à la sortie d'indice *m* de ladite étape de transformation complète à un instant *n* ;
- * l'opérateur conjugué.

**7.** Procédé de modulation selon la revendication 5, **caractérisé en ce que**, pour un filtre prototype de longueur L et un paramètre de délai D strictement inférieur à L - 1, tel que D = qM + 2p -1, avec q et p des entiers tels que $q \geq 0$ et $0 \leq p \leq M / 2 - 1$, et M divisible par 4,

si $0 \leq p \leq M / 4 - 1$, alors ladite première relation mathématique s'exprime sous la forme

$$u_{M/2+2p-k-1,n} = (-1)^n u_{k,n}^*$$, pour un entier k tel que $0 \leq k \leq M / 4 + p - 1$ et

ladite deuxième relation mathématique s'exprime sous la forme $u_{3M/4+p-k-1,n} = (-1)^n u_{3M/4+p+k,n}^*$,

pour un *entier k* tel que $0 \leq k \leq M / 4 - p - 1$,

sinon si $M / 4 \leq p \leq M / 2 - 1$, alors ladite première relation mathématique s'exprime sous la forme

$$u_{2p-M/2-k-1,n} = (-1)^n u_{k,n}^*$$, pour un entier k tel que $0 \leq k \leq p - M / 4 - 1$ et

ladite deuxième relation mathématique s'exprime sous la forme $u_{M-1-k,n} = (-1)^n u_{2p+k-M/2,n}^*$, pour un entier k tel que $0 \leq k \leq 3M / 4 - p - 1$,

avec :

- $u_{m,n}$ un symbole transformé associé à la sortie d'indice *m* de ladite étape de transformation complète à un instant *n* ;
- * l'opérateur conjugué.

**8.** Procédé de modulation selon la revendication 1, **caractérisé en ce que**, pour un filtre prototype à phase linéaire de longueur L et un paramètre de délai D strictement inférieur à L - 1, tel que *D = qM / 2 -1*, avec *q = 2q'+1*, q' un entier et M divisible par 2,

ladite étape d'obtention détermine ledit deuxième sous-ensemble à partir du premier sous-ensemble, en utilisant la relation mathématique $u_{M-1-k,n} = (-1)^n u_{k,n}^*$, pour un *entier k* tel que $0 \leq k \leq M / 2 - 1$,

avec :

- $u_{m,n}$ un symbole transformé associé à la sortie d'indice *m* de ladite étape de transformation complète à un instant *n* ;
- * l'opérateur conjugué ;

et **en ce que** le procédé comprend une étape de filtrage polyphase desdits M symboles transformés au moyen dudit filtre prototype, mettant en oeuvre des composantes polyphases telles que $G_k(z) = z^{-(q-1)}G_{M-1-k}(z^{-1})$ pour $0 \leq k \leq M / 2 - 1$.

**9.** Programme d'ordinateur comportant des instructions pour l'exécution des étapes du procédé de modulation selon la revendication 1 lorsque ledit programme est exécuté par un ordinateur.

10. Modulateur délivrant un signal multiporteuse de type OQAM, qui comprend des moyens de transformation (22), du domaine fréquentiel vers le domaine temporel, d'un ensemble de M symboles de données réels en M symboles transformés, comprenant :

- des moyens de transformation partielle (221) dudit ensemble de M symboles de données réels, mettant en oeuvre une transformée de Fourier partielle et délivrant un premier sous-ensemble de C symboles transformés, avec C strictement inférieur à M ;
- des moyens d'obtention (222), à partir dudit premier sous-ensemble, d'un deuxième sous-ensemble de (M-C) symboles transformés, complémentaire dudit premier sous-ensemble.

**Patentansprüche**

1. Modulationsverfahren zur Abgabe eines OQAM-Mehrträgersignals, das einen Schritt der Transformation von dem Frequenzbereich zu dem Zeitbereich einer Menge von M Symbolen von realen Daten durchführt, die eine Menge von M umgewandelten Symbolen liefert, die vollständige Transformation genannt wird, wobei der Schritt der vollständigen Transformation (22) die folgenden Unterschritte aufweist:

- Anwenden einer partiellen Fourier-Transformation (221) auf die Menge von M Symbolen von realen Daten, die eine erste Teilmenge von C umgewandelten Symbolen der Menge von M umgewandelten Symbolen liefert, wobei C strikt kleiner als M ist;
- Erhalten (222), ausgehend von der ersten Teilmenge, einer zweiten Teilmenge von (M-C) umgewandelten Symbolen der Menge von M umgewandelten Symbolen, wobei die zweite Teilmenge von (M-C) umgewandelten Symbolen die komplementäre Teilmenge der ersten Teilmenge von C umgewandelten Symbolen der Menge von M umgewandelten Symbolen ist.

2. Modulationsverfahren nach Anspruch 1, **dadurch gekennzeichnet, dass** die erste und zweite Teilmenge eine gleiche Größe aufweisen.

3. Modulationsverfahren nach Anspruch 1, **dadurch gekennzeichnet, dass** die erste Teilmenge die umgewandelten Symbole aufweist, die mit den Indexausgängen gleicher Parität des Schrittes der vollständigen Transformation verbunden sind.

4. Modulationsverfahren nach Anspruch 1, **dadurch gekennzeichnet, dass** es einen Schritt des Vorverarbeitens der Symbole von realen Daten aufweist, der vor dem Schritt der vollständigen Transformation durchgeführt wird.

5. Modulationsverfahren nach Anspruch 1, **dadurch gekennzeichnet, dass** der Schritt des Erhaltens einen ersten Teil der zweiten Untermenge ausgehend von einem ersten Teil der ersten Untermenge bestimmt, indem eine erste mathematische Beziehung verwendet wird, und einen zweiten Teil der zweiten Untermenge ausgehend von einem zweiten Teil der ersten Untermenge bestimmt, indem eine zweite mathematische Beziehung verwendet wird, wobei der erste und zweite Teil der ersten Untermenge beziehungsweise der zweiten Untermenge komplementär sind.

6. Modulationsverfahren nach Anspruch 5, **dadurch gekennzeichnet, dass** für einen Prototypfilter von einer Länge L gleich qM + 2p, mit q und p aus den ganzen Zahlen wie $q \geq 0$ und $0 \leq p \leq M / 2 - 1$ und M teilbar durch 4,

wenn $0 \leq p \leq M / 4 - 1$, dann die erste mathematische Beziehung in der Form $u_{M/2+2p-k-1,n} = (-1)^n u_{k,n}^*$ für eine ganze Zahl k wie $0 \leq k \leq M / 4 + p - 1$ ausgedrückt wird und

die zweite mathematische Beziehung in der Form $u_{3M/4+p-k-1,n} = (-1)^n u_{3M/4+p+k,n}^*$ für eine ganze Zahl k wie $0 \leq p \leq M / 4 - p - 1$ ausgedrückt wird,

andernfalls, wenn $M / 4 \leq p \leq M / 2 - 1$, dann die erste mathematische Beziehung in der Form $u_{2p-M/2-k-1,n} = (-1)^n u_{k,n}^*$ für eine ganze Zahl k wie $0 \leq k \leq p - M / 4 - 1$ ausgedrückt wird und

die zweite mathematische Beziehung in der Form $u_{M-1-k,n} = (-1)^n u^*_{2p+k-M/2,n}$ für eine ganze Zahl k wie $0 \leq k \leq 3M/4 - p$ - 1 ausgedrückt wird,
wobei:

- $u_{m,n}$ ein umgewandeltes Symbol ist, das mit dem Indexausgang $m$ des Schrittes der vollständigen Transformation zu einem Zeitpunkt $n$ verbunden ist;
- * der konjugierte Operator ist.

7. Modulationsverfahren nach Anspruch 5, **dadurch gekennzeichnet, dass** für einen Prototypfilter von einer Länge L und einen Verzögerungsparameter D, der strikt kleiner als L - 1 ist, wie D = qM + 2p - 1, mit q und p aus den ganzen Zahlen wie $q \geq 0$ und $0 \leq p \leq M/2$ - 1 und M teilbar durch 4 ist,

wenn $0 \leq p \leq M/4$ - 1, dann die erste mathematische Beziehung in der Form $u_{M/2+2p-k-1,n} = (-1)^n u^*_{k,n}$ für eine ganze Zahl $k$ wie $0 \leq k \leq M/4 + p$ - 1 ausgedrückt wird und die zweite mathematische Beziehung in der Form

$u_{3M/4+p-k-1,n} = (-1)^n u^*_{3M/4+p+k,n}$ für eine ganze Zahl $k$ wie $0 \leq k \leq M/4 - p$ - 1 ausgedrückt wird, andernfalls, wenn $M/4 \leq p \leq M/2$ - 1, dann die erste mathematische Beziehung in der Form

$u_{2p-M/2-k-1,n} = (-1)^n u^*_{k,n}$ für eine ganze Zahl $k$ wie $0 \leq k \leq p - M/4$ - 1 ausgedrückt wird und

die zweite mathematische Beziehung in der Form $u_{M-1-k,n} = (-1)^n u^*_{2p+k-M/2,n}$ für eine ganze Zahl $k$ wie $0 \leq k \leq 3M/4 - p$ - 1 ausgedrückt wird,
wobei:

- $u_{m,n}$ ein umgewandeltes Symbol ist, das mit dem Indexausgang $m$ des Schrittes der vollständigen Transformation zu einem Zeitpunkt $n$ verbunden ist;
- * der konjugierte Operator ist.

8. Modulationsverfahren nach Anspruch 1, **dadurch gekennzeichnet, dass** für einen Prototypfilter mit linearer Phase von einer Länge L und einen Verzögerungsparameter D, der strikt kleiner als L - 1 ist, wie $D = qM/2 - 1$, wobei $q = 2q'+1$, q' eine ganze Zahl und M durch 2 teilbar ist,
der Schritt des Erhaltens die zweite Untermenge, ausgehend von der ersten Untermenge bestimmt, indem die mathematische Beziehung $u_{M-1-k,n} = (-1)^n u^*_{k,n}$ für eine ganze Zahl $k$ wie $0 \leq k \leq M/2$ - 1 verwendet wird, wobei:

- $u_{m,n}$ ein umgewandeltes Symbol ist, das mit dem Indexausgang $m$ des Schrittes der vollständigen Transformation zu einem Zeitpunkt $n$ verbunden ist;
- * der konjugierte Operator ist;

und, dass das Verfahren einen Schritt der Mehrphasenfilterung der M Symbole, die mit Hilfe des Prototypfilters umgewandelt worden sind, aufweist, das Polyphasenkomponenten verwendet, wie beispielsweise $G_k(z)=z^{-(q-1)}G_{M-1-k}(z^{-1})$ für $0 \leq k \leq M/2$ - 1.

9. Computerprogramm, umfassend Anweisungen für das Durchführen der Schritte des Modulationsverfahrens nach Anspruch 1, wenn das Programm von einem Computer ausgeführt wird.

10. Modulator zur Abgabe eines OQAM-Mehrträgersignals, der Mittel zur Transformation (22) von dem Frequenzbereich zu dem Zeitbereich einer Menge von M Symbolen von realen Daten in M umgewandelte Symbole aufweist, umfassend:

- Mittel zur partiellen Transformation (221) der Menge von M Symbolen von realen Daten, die eine partielle Fourier-Transformation umsetzen und eine erste Teilmenge von C umgewandelten Symbolen liefern, wobei C strikt kleiner als M ist;
- Mittel zum Erhalten (222), ausgehend von der ersten Teilmenge, einer zweiten Teilmenge von (M-C) umgewandelten Symbolen, die komplementär zu der ersten Teilmenge ist.

**Claims**

1. Method of modulation delivering a multicarrier signal of OQAM type,
which implements a step of transformation, from the frequency domain to the time domain, of a set of M real data symbols delivering a set of M transformed symbols, termed complete transformation,
the said step of complete transformation (22) comprising the following sub-steps:

   - application of a partial Fourier transform (221) to the said set of M real data symbols, delivering a first subset of C transformed symbols of the said set of M transformed symbols, with C strictly less than M;
   - obtaining (222), on the basis of the said first subset, a second subset of (M-C) transformed symbols of the said set of M transformed symbols, the said second subset of (M-C) transformed symbols being the subset complementary to the said first subset of C transformed symbols of the said set of M transformed symbols.

2. Method of modulation according to Claim 1, **characterized in that** the said first and second subsets exhibit an identical size.

3. Method of modulation according to Claim 1, **characterized in that** the said first subset comprises the transformed symbols associated with the outputs of index of like parity of the said step of complete transformation.

4. Method of modulation according to Claim 1, **characterized in that** it comprises a step of preprocessing the said real data symbols, implemented prior to the said step of complete transformation.

5. Method of modulation according to Claim 1, **characterized in that** the said obtaining step determines a first part of the said second subset on the basis of a first part of the said first subset, by using a first mathematical relation,
and determines a second part of the said second subset on the basis of a second part of the said first subset, by using a second mathematical relation,
the said first and second parts of the said first subset, respectively of the said second subset, being complementary.

6. Method of modulation according to Claim 5, **characterized in that**, for a prototype filter of length L equal to qM + 2p, with q and p being integers such that $q \geq 0$ and $0 \leq p \leq M/2 - 1$, and M divisible by 4,
if $0 \leq p \leq M/4 - 1$, then the said first mathematical relation is expressed in the form

$$u_{M/2+2p-k-1,n} = (-1)^n u_{k,n}^*$$ for an integer k such that $0 \leq k \leq M/4 + p - 1$ and

the said second mathematical relation is expressed in the form $u_{3M/4+p-k-1,n} = (-1)^n u_{3M/4+p+k,n}^*$ for an integer k such that $0 \leq k \leq M/4 - p - 1$,
else if $M/4 \leq p \leq M/2 - 1$, then the said first mathematical relation is expressed in the form

$$u_{2p-M/2-k-1,n} = (-1)^n u_{k,n}^*$$ for an integer k such that $0 \leq k \leq p - M/4 - 1$ and

the said second mathematical relation is expressed in the form $u_{M-1-k,n} = (-1)^n u_{2p+k-M/2,n}^*$ for an integer k such that $0 \leq k \leq 3M/4 - p - 1$,
with:

   - $u_{m,n}$ a transformed symbol associated with the output of index *m* of the said step of complete transformation at an instant *n*;
   - * the conjugate operator.

7. Method of modulation according to Claim 5, **characterized in that**, for a prototype filter of length L and a lag parameter D strictly less than L - 1, such that D = qM + 2p - 1, with q and p being integers such that $q \geq 0$ and $0 \leq p \leq M/2 - 1$, and M divisible by 4,
if $0 \leq p \leq M/4 - l$, then the said first mathematical relation is expressed in the form

$$u_{M/2+2p-k-1,n} = (-1)^n u_{k,n}^*$$ for an integer k such that $0 \leq k \leq M/4 + p - 1$ and

the said second mathematical relation is expressed in the form $u_{3M/4+p-k-1,n} = (-1)^n u_{3M/4+p+k,n}^*$

for an integer k such that $0 \leq k \leq M/4 - p - 1$,

else if M / 4 ≤ p ≤ M / 2 - 1 then the said first mathematical relation is expressed in the form

$$u_{2p-M/2-k-1,n} = (-1)^n u_{k,n}^*$$ for an integer k such that 0 ≤ k ≤ p - M / 4 - 1 and

the said second mathematical relation is expressed in the form $$u_{M-1-k,n} = (-1)^n u_{2p+k-M/2,n}^*$$ for an integer k such that 0 ≤ k ≤ 3M / 4 - p - 1,
with:

- $u_{m,n}$ a transformed symbol associated with the output of index *m* of the said step of complete transformation at an instant *n*;
- * the conjugate operator.

8. Method of modulation according to Claim 1, **characterized in that**, for a prototype filter with linear phase of length L and a lag parameter D strictly less than L - 1, such that D = qM / 2 - 1, with q = 2q '+ 1, q' an integer and M divisible by 2, the said obtaining step determines the said second subset on the basis of the first subset, by using the mathematical relation $$u_{M-1-k,n} = (-1)^n u_{k,n}^*$$ for an integer k such that 0 ≤ k ≤ M / 2 - 1, with:

- $u_{m,n}$ a transformed symbol associated with the output of index *m* of the said step of complete transformation at an instant *n*;
- * the conjugate operator;

and **in that** the method comprises a step of polyphase filtering of the said M transformed symbols by means of the said prototype filter, implementing polyphase components such that
$G_k(z)=z^{-(q-1)}G_{M-1-k}(z^{-1})$ for 0 ≤ k ≤ M / 2 - 1.

9. Computer program comprising instructions for the execution of the steps of the method of modulation according to Claim 1 when the said program is executed by a computer.

10. Modulator delivering a multicarrier signal of OQAM type,
which comprises means of transformation (22), from the frequency domain to the time domain, of a set of M real data symbols into M transformed symbols, comprising:

- means of partial transformation (221) of the said set of M real data symbols, implementing a partial Fourier transform and delivering a first subset of C transformed symbols, with C strictly less than M;
- means for obtaining (222), on the basis of the said first subset, a second subset of (M-C) transformed symbols, which is complementary to the said first subset.

Fig. 1

Fig. 2

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9708547


**Littérature non-brevet citée dans la description**

- **P. SIOHAN ; N. LACAILLE.** Analysis of OFDM/OQAM systems based on the filterbank theory. *Proc. GLOBECOM'99, Rio de Janeiro, Brazil,* Décembre 1999, 2279-2284
- **C. SICLET ; P. SIOHAN.** Design of BFDM/OQAM systems based on biorthogonal modulated filter banks. *Proc. GLOBECOM'00, San Francisco, USA,* Novembre 2000, 701-705
- **SAHNINE C et al.** Efficient design approach and advanced architectures for universal OFDM systems. *Proceedings of the 2007 Ph.D Research in Microelectronics and Electronics Conférence, Piscataway US,* 01 Juillet 2007, ISBN 978-1-4244-1000-2, 33-36
- **P. DUHAMEL ; H. HOLLMANN.** Implementation of ''split-radix'' FFT algorithms for complex, real, and real symmetric data. *IEEE International Conference ICASSP '85.,* Avril 1985, vol. 10, 784-787
- **COOLEY-TUKEY.** An Algorithm for the Machine Calculation of Complex Fourier Series. *Math. Computat.,* 1965
- **P. SIOHAN ; N. LACAILLE.** *Analysis of OFDM/OQAM systems based on the filterbank theory*
- **C. SICLET ; P. SIOHAN.** *Design of BFDM/OQAM systems based on biorthogonal modulated filter banks*